# FASCICULE DE BREVET EUROPEEN

(11) **EP 3 595 612 B1**
(45) Date de publication et mention de la délivrance du brevet: **24.02.2021**
(21) Numéro de dépôt: 18715197.2
(22) Date de dépôt: 05.03.2018
(51) Int. Cl.: A61J 1/20, A61J 9/00

(54) **DISTRIBUTEUR D'UNE COMPOSITION SOUS FORME DE POUDRE DANS UN RECIPIENT ET RECIPIENT DU TYPE BIBERON POURVU D'UN TEL DISTRIBUTEUR**
SPENDER FÜR EINE ZUSAMMENSETZUNG IN PULVERFORM IN EINEM BEHÄLTER UND MIT SOLCH EINEM SPENDER AUSGESTATTETER BEHÄLTER VOM SAUGFLASCHENTYP
DISPENSER FOR A COMPOSITION IN THE FORM OF POWDER IN A CONTAINER, AND CONTAINER OF THE FEEDING BOTTLE TYPE PROVIDED WITH SUCH A DISPENSER

(30) Priorité: 16.03.2017 FR 1752173
(43) Date de publication de la demande: 22.01.2020
(73) Titulaire: AVA Inc., 75116 Paris (FR)
(72) Inventeur: TOUATI, Adrien, 75116 Paris (FR)
(74) Mandataire: Roman, Alexis
(86) Numéro de dépôt international: PCT/FR2018/050491
(87) Numéro de publication internationale: WO 2018/167395

(56) Documents cités:
- WO-A1-2015/035647
- US-A1- 2009 178 940
- US-A1- 2014 061 145

## Description

### DOMAINE TECHNIQUE DE L'INVENTION

L'invention concerne un distributeur d'une composition se présentant sous la forme de poudre dans un récipient ainsi qu'un récipient pourvu d'un tel distributeur.

Le distributeur est destiné notamment, mais non exclusivement, pour être mis en œuvre avec un biberon.

### ETAT DE LA TECHNIQUE

Il est connu de la demande GB2489721 un distributeur de poudre pour biberon comprenant un récipient de poudre et un connecteur au biberon dans lequel le connecteur comprend un accouplement adapté pour fixer de manière libérable le connecteur à une biberon et dans lequel le récipient de poudre est couplé de façon amovible au connecteur. Le récipient de poudre comprend une plaque de base définissant un ou plusieurs trous et le connecteur comprend une plaque d'étanchéité définissant un ou plusieurs trous correspondant aux trous d'élément de base. Le conteneur de poudre est monté mobile en rotation par rapport au connecteur pour définir une configuration angulaire fermée dans laquelle la plaque de base est située au voisinage de la plaque d'étanchéité et le ou les trous de la plaque d'étanchéité est (sont) désaligné(s) avec le ou les trous d'élément de base correspondants, de sorte que la poudre dans le récipient de poudre y est scellée et une configuration angulaire ouverte dans laquelle les deux jeux de trous sont alignés pour permettre à la poudre de s'écouler hors du récipient de poudre

US 2009/178940 divulgue un distributeur d'une composition en poudre dans un récipient.

Le distributeur de la demande susmentionnée présente cependant un inconvénient majeur relatif à l'étanchéité de l'ensemble lorsque le distributeur est monté sur le biberon. Celui-ci ne présente en effet pas une étanchéité fiable entre le connecteur et le biberon avec lequel il est couplé, du fait que l'étanchéité est réalisée seulement par la mise en prise du col du biberon dans un canal arrangé au niveau de la paroi de l'adaptateur. Par ailleurs l'étanchéité en position fermée du distributeur entre le connecteur et le récipient de poudre n'est également pas toujours totalement assurée, celle-ci restant dépendante du serrage du récipient de poudre sur le connecteur. Il est en effet nécessaire que le récipient de poudre soit suffisamment vissé pour que la plaque d'étanchéité, coincée entre le récipient de poudre et le connecteur assure sa fonction d'étanchéité. Un serrage insuffisant peut générer un jeu entre le récipient de poudre et le conteneur tel qu'en cas de retournement involontaire du biberon, le liquide contenu dans celui-ci entre en communication avec la poudre contenue dans le récipient de poudre.

L'invention vise à remédier à ce problème en proposant un distributeur d'une composition en poudre dont l'étanchéité, lorsqu'il est monté sur un récipient, est assurée.

L'invention a également pour objet un distributeur simple de manipulation, pouvant être monté et démonté rapidement et facilement sur un récipient et notamment sur un biberon et facilement nettoyable.

L'invention a également pour objet de proposer un distributeur comportant un nombre réduit de pièces.

L'invention a également pour objet de proposer un récipient, comme par exemple un biberon, pourvu d'un tel distributeur.

### OBJET DE L'INVENTION

A cet effet, l'invention propose un distributeur d'une composition en poudre dans un récipient, comprenant une pièce formant un réceptacle pour contenir la composition en poudre à dispenser dans le récipient, ladite pièce comprenant une paroi de fond pourvue d'au moins un orifice, une pièce formant un adaptateur comprenant un corps tubulaire pourvu d'un cloison transversale pourvue d'au moins un orifice et des moyens de fixation aptes à coopérer avec des moyens de fixation complémentaires porté par le réceptacle, le réceptacle étant mobile en rotation sur l'adaptateur entre une position fermée du distributeur dans laquelle l'orifice du réceptacle et l'orifice de l'adaptateur sont décalés l'un par rapport à l'autre et une position ouverte du distributeur dans laquelle l'orifice du réceptacle et l'orifice de l'adaptateur sont positionnés en vis-à-vis l'un de l'autre de sorte à permettre l'écoulement de la composition en poudre contenue dans le réceptacle hors de ce dernier. Le distributeur selon l'invention est remarquable en ce qu'il comporte en outre une pièce d'étanchéité comprenant une partie annulaire supérieure arrangée pour assurer l'étanchéité entre le réceptacle et l'adaptateur et une partie annulaire inférieure arrangée pour assurer l'étanchéité entre l'adaptateur et le récipient lorsque l'adaptateur est monté sur le récipient.

Avantageusement, les parties annulaires supérieure et inférieure sont reliées entre elles par au moins un bras de liaison traversant l'orifice de l'une des pièces.

Avantageusement, la pièce d'étanchéité forme une partie surmoulée de l'une des pièces.

Avantageusement, la pièce d'étanchéité est portée par l'adaptateur.

Avantageusement, la partie annulaire supérieure comprend une cloison comprenant au moins un orifice située en vis-à-vis de l'orifice de l'une des pièces.

Avantageusement, la cloison comporte au moins une zone en saillie de forme complémentaire à l'orifice de l'une des pièces et arrangé pour s'engager dans l'orifice de la pièce situé en vis-à-vis duquel la zone est placée lorsque le distributeur est en position fermée.

Avantageusement, le réceptacle est couplé de manière réversible à l'adaptateur

Avantageusement, le réceptacle comporte des moyens de fixation aptes à coopérer avec des moyens de fixation complémentaires d'une pièce additionnelle, comme par exemple un couvercle ou une bague de maintien d'une tétine lorsque le récipient concerné est un corps de biberon.

L'invention concerne également un récipient pourvu d'un distributeur selon l'une quelconque des revendications précédentes.

L'invention concerne également un biberon pour dispenser un liquide comprenant un corps de biberon présentant à l'une des ses extrémités une ouverture, un distributeur selon l'une quelconque des revendications précédentes couplé à ladite extrémité du corps de biberon et une tétine maintenue sur le distributeur au moyen d'une bague de retenue.

### BREVE DESCRIPTION DES FIGURES

D'autres objets et avantages de l'invention apparaîtront au cours de la description qui suit, faite en référence aux dessins annexés, dans lesquels :
- la figure 1 représente une vue schématique d'un biberon équipé d'un distributeur d'une composition de poudre selon l'invention ;
- la figure 2 représente une vue éclatée du biberon de la figure 1 ;
- la figure 3 représente une vue en coupe longitudinale du biberon de la figure 1 ;
- la figure 4 représente une vue en perspective de dessous du biberon de la figure 3 ;
- la figure 5 représente une vue éclatée de dessous du distributeur équipant le biberon de la figure 1 ;
- la figure 6 représente une vue éclatée de dessus de l'adaptateur ;
- la figure 7 représente une vus de dessus de l'adaptateur équipé de la pièce d'étanchéité ;
- la figure 8 représente le distributeur équipé d'un couvercle ;
- la figure 9 représente une vue en coupe du distributeur illustré sur la figure 1 ;
- la figure. 10 représente une vue en coupe d'une variante de réalisation du distributeur de la figure 9.

### DESCRIPTION DETAILLEE DES FIGURES

Dans ce qui suit, les termes de inférieur », « supérieur », « au-dessous », « au-dessous », « interne », « externe », se réfèrent à l'orientation du biberon et de ces composants tels que représentés sur les figures.

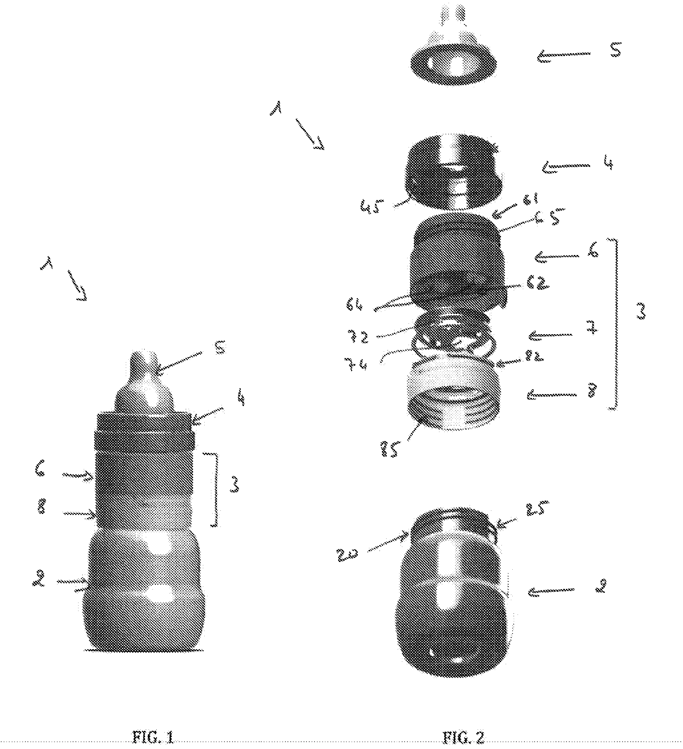

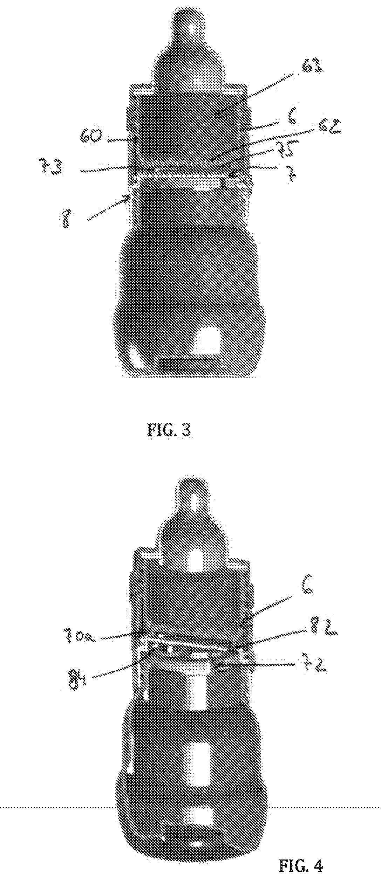

En relation avec les figures 1 à 4, il est décrit un biberon 1 équipé d'un distributeur 3 permettant la distribution d'une quantité de poudre de lait déterminée.

Le biberon 1 comporte un corps de biberon 2 destiné à contenir un liquide surmonté du distributeur 3, une tétine 5 couplée de manière réversible au distributeur 3 via une bague de maintien 4.

Le distributeur 3 comporte deux pièces, l'une constituant un réceptacle 6 pour contenir la poudre de lait à dispenser dans le corps du biberon 2, l'autre pièce constituant un adaptateur 8 permettant le couplage du réceptacle au corps du biberon 2. L'adaptateur peut être désigné également et indifféremment de connecteur.

Dans le mode de réalisation illustré, le réceptacle 6, de forme sensiblement cylindrique, comporte une paroi latérale 60, une extrémité supérieure ouverte 61 et une paroi de fond 62.

La paroi de fond 62 délimite avec la paroi latérale 60 et l'extrémité supérieure ouverte 61 un espace 63 pour recevoir la poudre de lait.

La paroi de fond 62 est pourvue de plusieurs orifices 64. Dans le mode de réalisation illustré, la paroi de fond 62 présente deux orifices 64 disposés symétriquement l'un par rapport à l'autre par rapport à l'axe longitudinal du distributeur 3. Les orifices 64 présentent une forme sensiblement triangulaire. Il est bien entendu évident qu'il peut être prévu des orifices 64 présentant d'autres formes comme notamment une forme circulaire sans sortir du cadre de l'invention. Comme on le comprendra cependant plus loin, la forme et les dimensions des orifices seront choisies de manière à permettre un écoulement rapide et aisé de la poudre contenue dans le réceptacle 6.

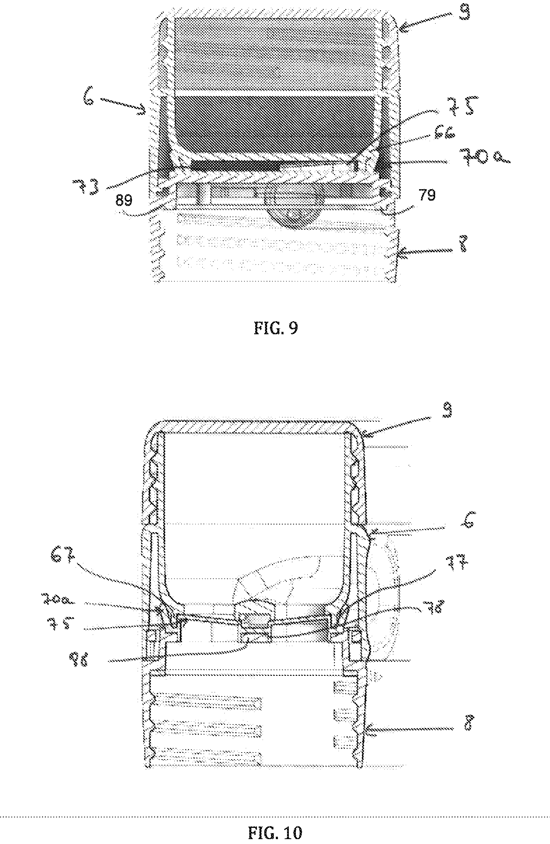

Le réceptacle 6 comporte une portion d'extrémité supérieure portant, sur sa face extérieure, un filetage hélicoïdal 65. Le filetage hélicoïdal 65 est arrangé pour coopérer avec le taraudage 45 ménagé sur la face interne de la bague de maintien 4 de tétine. La tétine 5 est ainsi fixée sur le réceptacle 6, du côté de l'extrémité supérieure ouverte 61, par vissage de la bague de maintien 4 sur la portion d'extrémité supérieure du réceptacle 6. Il peut être prévu également que le distributeur soit pourvu d'un couvercle 9 comprenant des moyens de couplage complémentaires au filetage hélicoïdal 65 du réceptacle comme illustré les figures 9 et 10.

L'adaptateur 8 comporte un corps tubulaire présentant une extrémité supérieure pourvue d'une cloison transversale 82. Comme la paroi de fond 62 du réceptacle 6, la cloison de l'adaptateur 8 comporte des orifices 84. Dans le mode de réalisation illustré, la cloison 82 est pourvue de quatre orifices 84. Ces orifices 84 sont répartis sur la cloison de manière à correspondre aux deux orifices 64 de la paroi de fond 62 du réceptacle lorsque le distributeur 3 est dans une position dite ouverte décrite plus loin. Lesdits orifices 84 présentent en outre et avantageusement une forme correspondant à celle des orifices 64 de la paroi de fond 62 du réceptacle 6.

L'adaptateur 8 comporte en outre des moyens permettant un couplage réversible sur le corps de biberon 2. Plus particulièrement, l'adaptateur 8 comporte des moyens de couplage aptes à coopérer avec des moyens de couplage complémentaires porté par le récipient. Dans le mode de réalisation illustré, les moyens de couplage consistent en un taraudage hélicoïdal 85 ménagé sur la face intérieure de la portion d'extrémité inférieure de l'adaptateur 8, ledit taraudage hélicoïdal 85 étant arrangé pour coopérer avec le filetage hélicoïdal 25 ménagé sur la face extérieure de la portion d'extrémité supérieure 20 du corps de biberon 2.

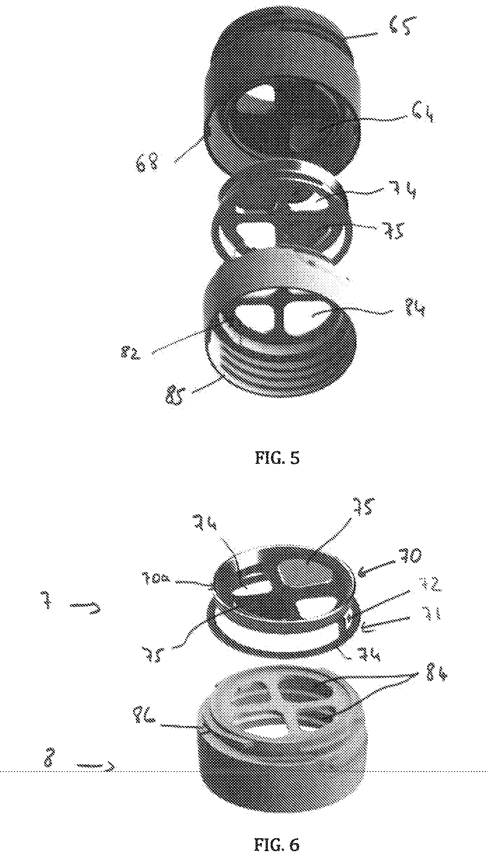

Le réceptacle 6 est couplé de manière réversible à l'adaptateur 8. Les moyens de couplage sont arrangés pour permettre la rotation du réceptacle 6 par rapport à l'adaptateur 8 entre une position dite fermée (position dans laquelle le réceptacle 6 est entièrement vissé sur l'adaptateur 8 et les orifices 64 du réceptacle 6 et les orifices 84 de l'adapteur 8 soient décalés l'un par rapport à l'autre), une position dite ouverte (position dans laquelle les orifices 64 du réceptacle 6 et les orifices 84 de l'adaptateur 8 sont positionnés en regard les uns des autres de sorte à permettre l'écoulement de la poudre de lait contenue dans le réceptacle 6 dans le corps de biberon) et une position dans laquelle le réceptacle 6 est découplé de l'adaptateur 8. Dans le mode de réalisation illustré, les moyens de couplage comprennent des extensions 86 ménagées sur la portion d'extrémité supérieure de l'adaptateur 8 et arrangées pour former une rampe de guidage hélicoïdale discontinue et un ou plusieurs pion(s) ménagées) 68 sur la portion d'extrémité inférieure du réceptacle 6 (figures 5 et 6). Au moins une des extensions est pourvue, en partie haute de la rampe, d'un plot d'arrêt arrangé pour bloquer le réceptacle en position d'ouverture.

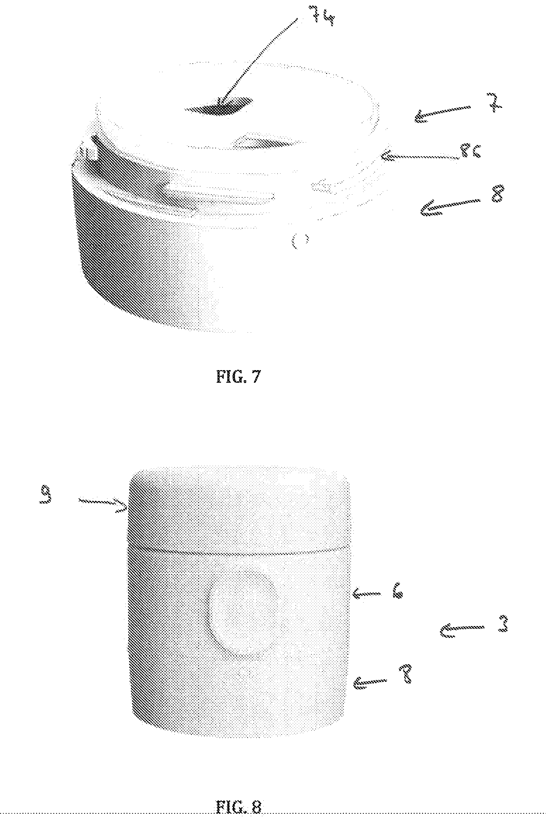

Le distributeur 3 comporte en outre une pièce d'étanchéité 7 destinée à assurer conjointement l'étanchéité même du distributeur 3 (étanchéité entre le réceptacle 6 et l'adaptateur 8) et l'étanchéité entre l'adaptateur 8 et le corps de biberon 2. Dans le mode de réalisation illustré, la pièce d'étanchéité 7 est portée par l'adaptateur 8 et plus particulièrement surmoulée sur l'adaptateur 8 (figure 7).

La pièce d'étanchéité 7 comprend une partie annulaire supérieure 70 et une partie annulaire inférieure 71 reliées entre elles par des bras de liaison 72. Comme illustré sur la figure 7, chaque bras de liaison 72 s'étend au travers d'un des orifices 84 de la cloison de l'adaptateur 8. Dans le mode de réalisation illustré, les parties annulaires supérieure et inférieure 70, 71 sont reliées par deux bras de liaison 72 diamétralement opposés.

La partie annulaire supérieure 70 est arrangée pour assurer l'étanchéité entre le réceptacle 6 et l'adaptateur 8. Elle est pourvue d'une cloison 73 (ou plateau) comprenant deux orifices 74 situés respectivement en vis-à-vis d'un des orifices 84 de l'adaptateur 8. Comme le montre la figure 6, lesdits orifices 74 de la partie annulaire 70 sont disposés symétriquement l'un par rapport à l'autre par rapport à l'axe longitudinal du distributeur 3, et présentent une forme identique aux orifices 84 de l'adaptateur 8 en vis-à-vis desquels ils sont positionnés.

La cloison 73 comporte en outre, sur sa face supérieure, deux zones 75 en saillie disposées symétriquement l'une par rapport à l'autre par rapport à l'axe longitudinal du distributeur 3 et intercalées entre les orifices 74. Il s'agit avantageusement de zones surélevées de matière. Lesdites zones 75 présentent avantageusement une forme complémentaire à l'orifice 64 du réceptacle 6 en vis à vis duquel elles sont disposées. Elles sont arrangées pour obturer respectivement l'orifice 64 du réceptacle 6 en vis-à-vis duquel elles sont positionnées lorsque le distributeur 3 est en position fermée. La présence de zones ainsi surélevées permet ainsi de renforcer l'étanchéité entre le réceptacle 6 et l'adaptateur 8.

La partie annulaire supérieure 70 présente en outre un rebord d'appui 70a s'étendant au-dessus de la cloison, et arrangé pour venir en appui sur la portion d'extrémité inférieure 66 du réceptacle 6. La partie supérieure de la pièce d'étanchéité 7 présente ainsi sous la forme d'une coupelle.

La partie annulaire inférieure 71 est arrangée pour assurer l'étanchéité entre l'adaptateur 8 et le récipient 6 lorsque l'adaptateur 8 est monté sur le corps de biberon 2. La partie annulaire inférieure 72 est arrangée pour former une collerette 79 présentant une surface supérieure venant en appui contre un épaulement 89 ménagé sur la paroi interne de l'adaptateur 8 (figure 9).

Les bras de liaison 72 sont coudés de sorte à longer les faces du réceptacle 6 et de l'adaptateur 8 sur lesquelles ils sont en appui.

La figure 10 illustre une variante de réalisation du distributeur. Dans le mode de réalisation illustré, le distributeur est représenté pourvue d'un couvercle 9. Dans ce mode de réalisation, les zones en saillie 75 de la partie annulaire supérieure 70 sont arrangées avec le rebord 70a de manière à définir une gorge circulaire 77 recevant une extension circulaire 67 ménagée en extrémité inférieure du réceptacle 6 en position de fermeture.

Avantageusement, la cloison transversale 82 de l'adaptateur 8 comporte un ergot central 88 apte à venir se loger dans un logement central 78 ménagé côté face inférieure de la cloison 73 de la pièce d'étanchéité.

L'invention est décrite dans ce qui précède à titre d'exemple. Il est entendu que l'homme du métier est à même de réaliser différentes variantes de réalisation de l'invention sans pour autant sortir du cadre de l'invention

## Revendications

1. Distributeur (3) d'une composition en poudre dans un récipient, comprenant une pièce formant un réceptacle (6) pour contenir la composition en poudre à dispenser dans le récipient, ladite pièce comprenant une paroi de fond (62) pourvue d'au moins un orifice (64), une pièce formant un adaptateur (8) comprenant un corps tubulaire pourvu d'un cloison transversale (82) pourvue d'au moins un orifice (84) et des moyens de fixation aptes à coopérer avec des moyens de fixation complémentaires porté par le réceptacle (6), le réceptacle (6) étant mobile en rotation sur l'adaptateur (8) entre une position fermée du distributeur (3) dans laquelle l'orifice (64) du réceptacle (6) et l'orifice (84) de l'adaptateur (8) sont décalés l'un par rapport à l'autre et une position ouverte du distributeur (3) dans laquelle l'orifice (64) du réceptacle (6) et l'orifice (84) de l'adaptateur (8) sont positionnés en vis-à-vis l'un de l'autre de sorte à permettre l'écoulement de la composition en poudre contenue dans le réceptacle (6) hors de ce dernier, **caractérisé en ce que** le distributeur (3) comporte en outre une pièce d'étanchéité (7) comprenant une partie annulaire supérieure (70) arrangée pour assurer l'étanchéité entre le réceptacle l'adaptateur (8) et une partie annulaire inférieure (71) arrangée pour assurer l'étanchéité entre l'adaptateur (8) et le récipient lorsque l'adaptateur (8) est monté sur le récipient.

2. Distributeur (3) selon la revendication 1, **caractérisé en ce que** les parties annulaires supérieure et inférieure sont reliées entre elles par au moins un bras de liaison traversant l'orifice de l'une des pièces.

3. Distributeur (3) selon la revendication 1 ou la revendication 2, **caractérisé en ce que** la pièce d'étancheité (7) forme une partie surmoulée de l'une des pièces.

4. Distributeur (3) selon l'une quelconque des revendications 1 à 3, **caractérisé en ce que** la pièce d'étanchéité (7) est portée par l'adaptateur (8).

5. Distributeur (3) selon l'une quelconque des revendications 1 à 4, **caractérisé en ce que** la partie annulaire supérieure comprend une cloison comprenant au moins un orifice située en vis-à-vis de l'orifice de l'une des pièces.

6. Distributeur (3) selon la revendication précédente, **caractérisé en ce que** la cloison comporte au moins une zone en saillie de forme complémentaire à l'orifice de l'une des pièces et arrangé pour s'engager dans l'orifice de la pièce situé en vis-à-vis duquel la zone est placée lorsque le distributeur (3) est en position fermée.

7. Distributeur (3) selon l'une quelconque des revendications précédentes, **caractérisé en ce que** le réceptacle (6) est couplé de manière réversible à l'adaptateur (8).

8. Distributeur (3) selon l'une quelconque des revendications précédentes, **caractérisé en ce que** le réceptacle (6) comporte des moyens de fixation aptes à coopérer avec des moyens de fixation complémentaires d'une pièce additionnelle.

9. Récipient pourvu d'un distributeur (3) selon l'une quelconque des revendications précédentes.

10. Biberon pour dispenser un liquide comprenant un corps de biberon présentant à l'une des ses extrémités une ouverture, un distributeur (3) selon l'une quelconque des revendications précédentes couplé à ladite extrémité du corps de biberon et une tétine maintenue sur le distributeur (3) au moyen d'une bague de maintien.

## Patentansprüche

1. Spender (3) zur Abgabe einer Zusammensetzung in Pulverform in einen Behälter, umfassend ein ein Aufnahmegefäß (6) bildendes Teil zum Aufnehmen der in den Behälter abzugebenden Zusammensetzung in Pulverform, wobei das Teil eine mit wenigstens einer Öffnung (64) versehene Bodenwand (62) umfasst, und ein einen Adapter bildendes Teil (8), das einen rohrförmigen Körper, der mit einer Quertrennwand (82) versehen ist, die mit wenigstens einer Öffnung (84) versehen ist, und Befestigungsmittel, die geeignet sind, mit von dem Aufnahmegefäß (6) getragenen komplementären Befestigungsmitteln zusammenzuwirken, umfasst, wobei das Aufnahmegefäß (6) auf dem Adapter (8) drehbeweglich ist zwischen einer geschlossenen Position des Spenders (3), in welcher die Öffnung (64) des Aufnahmegefäßes (6) und die Öffnung (84) des Adapters (8) relativ zueinander versetzt sind, und einer geöffneten Position des Spenders (3), in welcher die Öffnung (64) des Aufnahmegefäßes (6) und die Öffnung (84) des Adapters (8) einander gegenüber positioniert sind, so dass sie das Ausfließen der in dem Aufnahmegefäß (6) enthaltenen Zusammensetzung in Pulverform aus diesem Letzteren ermöglichen, **dadurch gekennzeichnet, dass** der Spender (3) außerdem ein Dichtungsteil (7) aufweist, das einen oberen ringförmigen Abschnitt (70), der dafür eingerichtet ist, die Dichtigkeit zwischen dem Aufnahmegefäß und dem Adapter (8) sicherzustellen, und einen unteren ringförmigen Abschnitt (71), der dafür eingerichtet ist, die Dichtigkeit zwischen dem Adapter (8) und dem Behälter sicherzustellen, wenn der Adapter (8) auf dem Behälter angebracht ist, umfasst.

2. Spender (3) nach Anspruch 1, **dadurch gekennzeichnet, dass** der obere und der untere ringförmige Abschnitt durch wenigstens einen Verbindungsarm miteinander verbunden sind, der die Öffnung eines der Teile durchquert.

3. Spender (3) nach Anspruch 1 oder Anspruch 2, **dadurch gekennzeichnet, dass** das Dichtungsteil (7) einen aufgeformten Abschnitt eines der Teile bildet.

4. Spender (3) nach einem der Ansprüche 1 bis 3, **dadurch gekennzeichnet, dass** das Dichtungsteil (7) von dem Adapter (8) getragen wird.

5. Spender (3) nach einem der Ansprüche 1 bis 4, **dadurch gekennzeichnet, dass** der obere ringförmige Abschnitt eine Trennwand umfasst, die wenigstens eine Öffnung umfasst, die sich gegenüber der Öffnung eines der Teile befindet.

6. Spender (3) nach dem vorhergehenden Anspruch, **dadurch gekennzeichnet, dass** die Trennwand wenigstens einen vorstehenden Bereich mit einer zu der Öffnung des einen der Teile komplementären Form aufweist, der dafür eingerichtet ist, in die Öffnung des Teils einzugreifen, gegenüber welcher der Bereich angeordnet ist, wenn sich der Spender (3) in der geschlossenen Position befindet.

7. Spender (3) nach einem der vorhergehenden Ansprüche, **dadurch gekennzeichnet, dass** das Aufnahmegefäß (6) mit dem Adapter (8) reversibel gekoppelt ist.

8. Spender (3) nach einem der vorhergehenden Ansprüche, **dadurch gekennzeichnet, dass** das Aufnahmegefäß (6) Befestigungsmittel aufweist, die geeignet sind, mit komplementären Befestigungsmitteln eines zusätzlichen Teils zusammenzuwirken.

9. Behälter, welcher mit einem Spender (3) nach einem der vorhergehenden Ansprüche versehen ist.

10. Saugflasche zum Abgeben einer Flüssigkeit, welche einen Saugflaschenkörper, der an einem seiner Enden eine Öffnung aufweist, einen Spender (3) nach einem der vorhergehenden Ansprüche, der mit diesem Ende des Saugflaschenkörpers gekoppelt ist, und einen Sauger, der auf dem Spender (3) mittels eines Halteringes gehalten wird, umfasst.

## Claims

1. Dispenser (3) of a composition in the form of powder in a container, comprising a piece forming a receptacle (6) for containing the composition in the form of powder to be dispensed in the container, said piece comprising a bottom wall (62) provided with at least one orifice (64), a piece forming an adaptor (8) comprising a tubular body provided with a transverse partition (82) provided with at least one orifice (84) and fixing means capable of cooperating with complementary fixing means borne by the receptacle (6), the receptacle (6) being rotationally movable on the adapter (8) between a closed position of the dispenser (3) in which the orifice (64) of the receptacle (6) and the orifice (84) of the adapter (8) are offset with respect to one another and an open position of the dispenser (3) in which the orifice (64) of the receptacle (6) and the orifice (84) of the adapter (8) are positioned facing one another so as to allow the flow of the composition in the form of powder contained in the receptacle (6) out thereof, **characterized in that** the dispenser (3) further comprises a sealing piece (7) comprising an upper annular part (70) arranged to ensure the seal between the receptacle and the adapter (8) and a lower annular part (71) arranged to ensure the seal between the adapter (8) and the container when the adapter (8) is mounted on the container.

2. Dispenser (3) according to Claim 1, **characterized in that** the upper and lower annular parts are linked to one another by at least one link arm passing through the orifice of one of the pieces.

3. Dispenser (3) according to Claim 1 or Claim 2, **characterized in that** the sealing piece (7) forms an over moulded piece of one of the pieces.

4. Dispenser (3) according to any one of Claims 1 to 3, **characterized in that** the sealing piece (7) is borne by the adapter (8).

5. Dispenser (3) according to any one of Claims 1 to 4, **characterized in that** the upper annular part comprises a partition comprising at least one orifice situated facing the orifice of one of the pieces.

6. Dispenser (3) according to the preceding claim, **characterized in that** the partition comprises at least one protruding zone of a form complementing the orifice of one of the pieces and arranged to engage in the orifice of the piece situated facing which the zone is placed when the dispenser (3) is in closed position.

7. Dispenser (3) according to any one of the preceding claims, **characterized in that** the receptacle (6) is coupled reversibly to the adapter (8).

8. Dispenser (3) according to any one of the preceding claims, **characterized in that** the receptacle (6) comprises fixing means capable of cooperating with complementary fixing means of an additional piece.

9. Container provided with a dispenser (3) according to any one of the preceding claims.

10. Feeding bottle for dispensing a liquid comprising a feeding bottle body having an opening at one of its ends, a dispenser (3) according to any one of the preceding claims coupled to said end of the feeding bottle body and a nipple held on the dispenser (3) by means of a securing ring.
